# FASCICULE DE BREVET EUROPEEN

(11) **EP 2 795 222 B1**
(45) Date de publication et mention de la délivrance du brevet: **01.05.2019**
(21) Numéro de dépôt: 12809788.8
(22) Date de dépôt: 18.12.2012
(51) Int. Cl.: F28D 9/00, F28F 9/02, F02B 29/04, F28D 21/00

(54) **ÉCHANGEUR DE CHALEUR À PLAQUES EMPILÉES COMPRENANT UN COLLECTEUR**
GESTAPELTER PLATTENWÄRMETAUSCHER MIT EINEM KOLLEKTOR
STACKED-PLATE HEAT EXCHANGER INCLUDING A COLLECTOR

(30) Priorité: 22.12.2011 FR 1162250
(43) Date de publication de la demande: 29.10.2014
(73) Titulaire: Valeo Systèmes de Contrôle Moteur, 95800 Cergy (FR)
(72) Inventeur: LEROUX, Samuel, F-78300 Poissy (FR); LALLEMANT, Mathieu, F-78600 Maisons-Laffitte (FR); SORIN, Stéphane, F-78600 Maisons-Laffitte (FR)
(74) Mandataire: Metz, Gaëlle
(86) Numéro de dépôt international: PCT/EP2012/076033
(87) Numéro de publication internationale: WO 2013/092638

(56) Documents cités:
- EP-A2- 0 625 686
- WO-A1-2009/156365
- AT-A4- 506 972
- DE-A1- 19 902 504
- JP-A- 6 257 983

## Description

La présente invention concerne un échangeur de chaleur à plaques empilées. Un échangeur de chaleur comprenant les caractéristiques du préambule de la revendication 1 est divulgué dans document JPH06257983.

L'invention s'applique à tout type d'échangeurs de chaleur, notamment pour véhicule automobile, comme par exemple des échangeurs destinés à être montés dans le compartiment moteur du véhicule tels que des refroidisseurs d'air de suralimentation (RAS) ou des échangeurs de recirculation des gaz d'échappement du moteur, appelés également échangeurs EGR (Exhaust Gas Recirculation Coolers ou EGRC).

Dans ce domaine, il est connu des échangeurs de chaleur comprenant une pluralité de plaques empilées formant des surfaces d'échange de chaleur entre deux fluides dits premier et deuxième fluides. Ces premier et deuxième fluides circulent entre les plaques, en couches alternées, dans des circuits de passage des fluides. Des intercalaires peuvent être prévus pour améliorer l'échange de chaleur entre ces deux fluides. L'empilement de plaques est ainsi configuré de façon à définir deux circuits différents : celui du premier fluide tel qu'un liquide de refroidissement et celui du deuxième fluide, tel qu'un gaz à refroidir.

Sur ces échangeurs, les plaques sont pourvues de poches embouties crevées perpendiculairement au plan de la plaque pour le passage du premier fluide d'une couche de circulation du premier fluide à l'autre sans communiquer avec la couche de circulation du deuxième fluide située entre les deux.

Le premier fluide arrive et sort de l'échangeur par l'intermédiaire de tubulures d'entrée/sortie. Du fait de la configuration des plaques, ces tubulures d'entrée/sortie du premier fluide sont situées en vis-à-vis des poches embouties crevées des plaques. En outre, le positionnement des tubulures est fait perpendiculairement aux plaques et se limite donc à proposer des zones d'interface situées des deux cotés de l'échangeur parallèles aux plaques, c'est-à-dire les cotés supérieur et/ou inférieur de l'échangeur au droit des collecteurs formés par l'empilement des poches embouties. Un inconvénient est que cela limite les différentes configurations possibles de raccordement de l'échangeur.

Du fait de la tendance du marché allant vers une réduction des espaces disponibles pour les échangeurs de chaleur et ses composants, les environnements dans lesquels ils doivent être intégrés sont de plus en plus complexes. Il est donc important de mettre au point des échangeurs compacts qui proposent un important degré de liberté d'adaptation dans le positionnement des tubulures d'entrée et de sortie du premier fluide, ceci afin de pouvoir intégrer l'ensemble de manière efficace dans l'espace disponible.

L'invention vise à améliorer la situation.

Elle propose à cet effet un échangeur de chaleur, comprenant un faisceau destiné à permettre un échange de chaleur entre un premier et un deuxième fluide et un carter à l'intérieur duquel ledit faisceau est disposé, ledit carter comprenant un premier et un deuxième orifices de passage du premier fluide communiquant avec ledit faisceau, caractérisé par le fait que ledit échangeur comprend un collecteur situé sur ledit carter, ledit collecteur définissant une première liaison de fluide avec le premier orifice et une deuxième liaison de fluide avec le deuxième orifice.

Grâce à l'invention, il est de la sorte possible de disposer librement des raccords connectant l'échangeur à une boucle de circulation du premier fluide. En effet, l'emplacement desdits raccords étant connu, il suffit de configurer les liaisons de fluide pour qu'elles relient lesdits orifices de passages et lesdits raccords. Ainsi, l'échangeur de l'invention offre un important degré d'adaptation à l'environnement dans lequel il doit être monté, le collecteur et ses liaisons de fluide permettant de choisir la zone de l'échangeur qui fera interface avec la boucle de circulation du premier fluide. Le premier et le deuxième orifice permettent, notamment, au premier fluide d'entrer et de sortir du faisceau.

Selon un aspect de l'invention, au moins une des liaisons de fluide comprend un canal de circulation du premier fluide. Le premier fluide est ainsi destiné à parcourir ce canal en entrant et/ou en sortant de l'échangeur.

Selon un exemple de réalisation de l'invention, ledit collecteur comprend une plaque présentant au moins une zone emboutie, ledit canal étant défini par ladite zone emboutie et une partie du carter située en vis-à-vis de ladite zone emboutie. Ladite partie du carter située en vis-à-vis de ladite zone emboutie comprend, notamment, le premier et/ou le deuxième orifice.

Dans une forme particulière de l'invention, ledit collecteur comprend une première ouverture et une deuxième ouverture, ledit canal définissant un premier coude entre la première ouverture et le premier orifice et/ou entre la deuxième ouverture et le deuxième orifice. Le premier coude est défini selon un plan parallèle à une face du carter sur laquelle le collecteur est situé. Il permet d'orienter la liaison de fluide depuis le premier orifice et/ou le deuxième orifice jusqu'à l'endroit du carter où l'on souhaite raccorder l'échangeur à la boucle de circulation du premier fluide.

Avantageusement, la première ouverture est située sur la zone emboutie à une extrémité du canal, située en vis-à-vis du carter et la deuxième ouverture est située sur une face plane de la plaque et en vis-à-vis du deuxième orifice. Dans ce cas, le collecteur définit un seul canal, à savoir celui de la première liaison de fluide.

Selon un aspect de l'invention, le collecteur comprend un premier raccord relié à la première ouverture et un deuxième raccord relié à la deuxième ouverture. En adaptant la position des liaisons de fluide, il est ainsi possible de disposer le premier raccord et le deuxième raccord aux endroits de l'échangeur les plus adaptés pour son intégration avec le reste du circuit dans le véhicule. Avantageusement, le premier raccord est une bride ou une tubulure et le deuxième raccord est une bride ou une tubulure.

Selon un exemple de réalisation de l'invention, l'un au moins des raccords comprend un deuxième coude agencé pour rendre progressive une section de passage du premier fluide dans le raccord entre une embouchure du raccord destinée à être raccordée à une boucle de circulation du premier fluide et de l'ouverture correspondante. L'évolution progressive de la section du deuxième raccord permet de réduire la perte de charge que subit le premier fluide au moment où il entre et/ou au moment où il sort de l'échangeur.

Dans une forme particulière de l'invention, le canal est agencé pour rendre progressive une section de passage du premier fluide entre la première ouverture et le premier orifice et/ou entre la deuxième ouverture et le deuxième orifice. L'évolution progressive de la section du canal permet de réduire la perte de charge que subit le premier fluide au moment où il entre et/ou au moment où il sort de l'échangeur.

Selon un aspect de l'invention, le collecteur présente sensiblement les mêmes dimensions qu'une face du carter sur laquelle il est situé. L'épaisseur de la face du carter sur laquelle le collecteur est situé peut ainsi avoir une épaisseur réduite, l'échangeur gardant une bonne tenue mécanique grâce au collecteur.

Avantageusement, le collecteur comprend des nervures de renforcement mécanique. Le collecteur renforce ainsi la tenue mécanique du carter et donc de l'échangeur afin de mieux résister aux différentes contraintes que subit ce dernier.

Selon un exemple de réalisation, le premier orifice, le deuxième orifice et le collecteur sont sur une même face du carter.

Dans une forme particulière de l'invention, le premier et le deuxième orifices se situent le long d'un premier coté du carter, la première et la deuxième ouvertures étant situées le long d'un deuxième coté du carter, adjacent au premier coté du carter.

L'invention concerne aussi un module d'admission d'air pour moteur thermique de véhicule, notamment automobile, comprenant un échangeur tel que décrit précédemment.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un module d'admission d'air pour moteur thermique de véhicule comprenant un échangeur selon l'invention.
- la figure 2 est une vue en perspective éclatée d'un faisceau d'échange de chaleur que comprend l'échangeur.
- la figure 3 est une vue en perspective, partielle, d'un carter de l'échangeur et d'un collecteur selon l'invention
- la figure 4 est une vue de dessus représentant le carter et le collecteur de la figure 3.
- la figure 5 est une vue en perspective du carter et d'une variante de réalisation du collecteur.

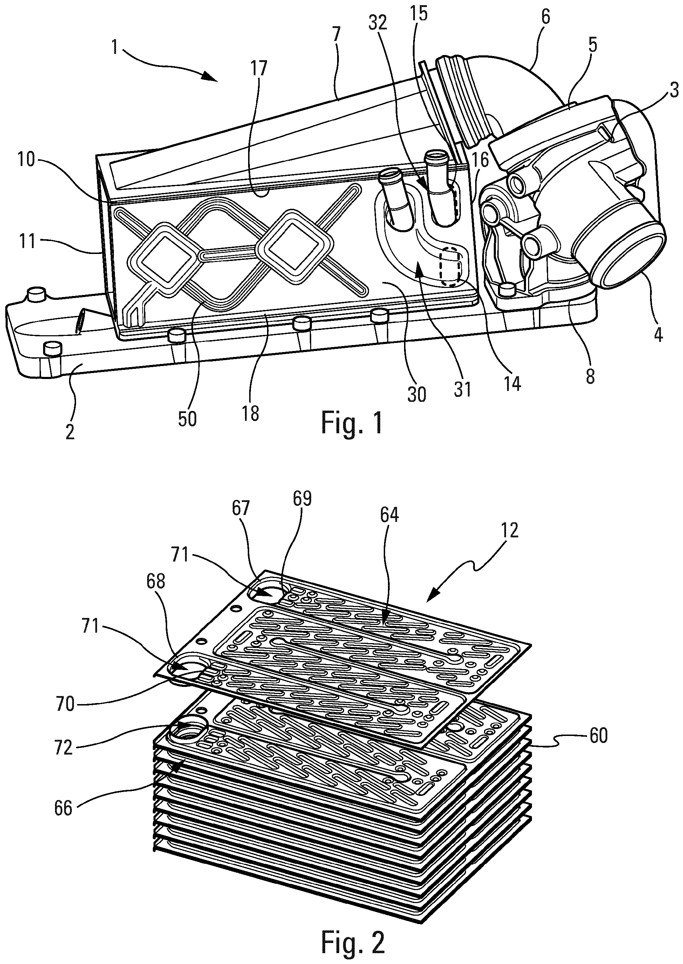

La figure 1 illustre un module d'admission d'air 1 pour moteur thermique de véhicule, notamment automobile, selon l'invention. Un tel module d'admission d'air 1 se situe, notamment, sur la culasse du moteur, face aux pipes d'admissions d'air dans le moteur.

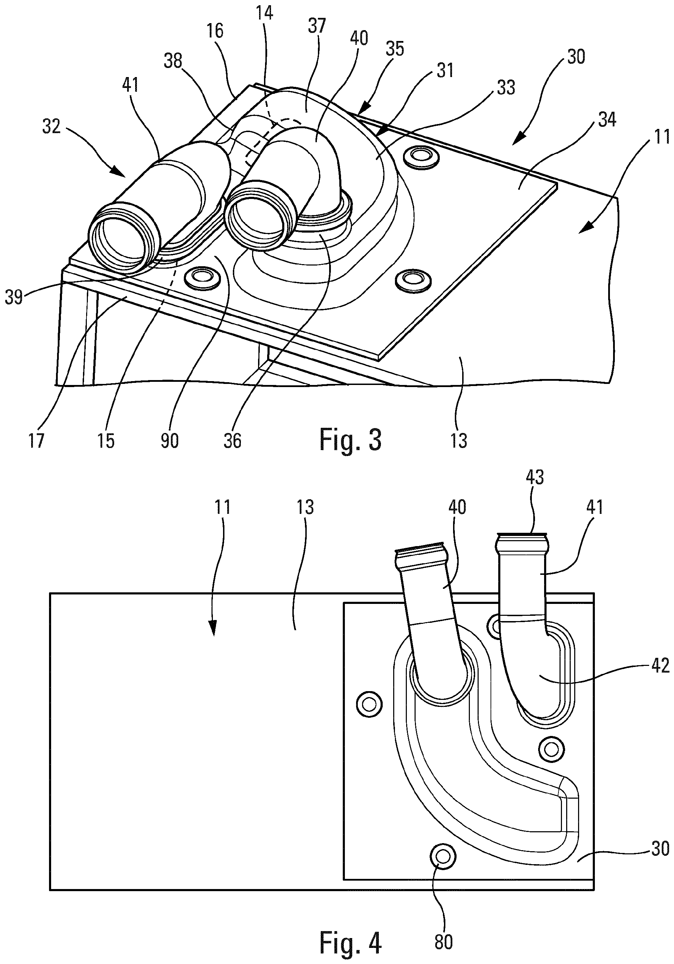

Ce module d'admission d'air 1 comprend un échangeur de chaleur 10 selon l'invention. Le rôle de cet échangeur 10 est, notamment de permettre un échange de chaleur entre un premier fluide, par exemple de l'eau ou de l'eau glycolée et un deuxième fluide, notamment de l'air ou un mélange d'air et de gaz d'échappement dit gaz EGR, afin de refroidir le deuxième fluide. L'échangeur 10 est monté sur une interface 2 de raccord au moteur permettant de distribuer le deuxième fluide au moteur et destinée à être fixée sur le moteur. L'échangeur 10 est de forme sensiblement parallélépipédique. Il comprend un carter 11, mieux visible à la figure 3, et un faisceau 12 représenté à la figure 2, situé à l'intérieur du carter 11 et destiné à permettre un échange de chaleur entre le premier fluide et le deuxième fluide.

Le module d'admission d'air 1 comprend une vanne doseuse double 3. Cette vanne doseuse double 3 est montée sur l'interface 2 de raccord au moteur à coté de l'échangeur 10. Elle permet de distribuer le deuxième fluide soit dans l'échangeur 10 afin qu'il soit refroidi, soit directement dans le moteur. La vanne doseuse double 3 comprend pour cela une entrée 4 pour le deuxième fluide, une première sortie 5 connectée à une tubulure 6 la raccordant à une boîte collectrice 7 du deuxième fluide que comprend l'échangeur 10, et une deuxième sortie 8 directement raccordée à l'interface 2 de raccord au moteur.

Le carter 11 comprend quatre faces de sorte qu'il définit sensiblement un parallélépipède rectangle. Il comprend deux grandes faces longitudinales opposées entre elles et deux petites faces latérale opposées entre elles et reliant les deux grandes faces longitudinales entre elles. Le carter 11 laisse ainsi libre les deux faces restantes du parallélépipède, opposées entre elles et appelées première et deuxième faces libres. La boîte collectrice 7 du deuxième fluide est raccordée à la première face libre du carter 11. Le carter 11 est raccordé à l'interface 2 de raccord au moteur au niveau de sa deuxième face libre. Ainsi le deuxième fluide traverse le carter 11 de part en part depuis la boîte collectrice 7 jusqu'à l'interface 2 de raccord au moteur.

Le faisceau 12 illustré à la figure 2 comprend ici des plaques empilées 60. Les plaques 60 sont groupées par paires et définissent chacune un circuit 64 de circulation du premier fluide. De la sorte, le circuit 64 d'une plaque supérieure et d'une plaque inférieure d'une même paire de plaques se complètent pour constituer un conduit de circulation du premier fluide.

Les plaques 60 ont, par exemple, la forme générale d'un rectangle allongé de dimensions sensiblement inférieures aux dimensions des grandes faces longitudinales du carter. Les plaques 60 ont ainsi deux grands côtés et deux petits côtés, chacune des plaques comportant deux bossages, dit premier et deuxième bossage 67, 68. Le premier bossage 67 présente une entrée 69 du circuit 64 de circulation du premier fluide et le deuxième bossage 68 présente une sortie 70 du circuit 64 de circulation du premier fluide. Des circuits 66 pour la circulation du deuxième fluide sont prévus entre deux plaques 60 en vis-à-vis de deux paires de plaques 60 adjacentes.

Afin de permettre la communication du premier fluide entre les différentes paires de plaques et donc entre les différents circuits 64 de circulation du premier fluides, les bossages 67, 68 sont ici percés d'un orifice 71 de passage du premier fluide et sont en contact avec les bossages 67, 68 d'une plaque 60 adjacente pour former respectivement une boîte collectrice d'entrée non visible, et une boîte collectrice de sortie 72 pour le premier fluide. La boîte collectrice d'entrée débouche, par exemple, dans le premier orifice du carter et la boîte collectrice de sortie débouche, par exemple, dans le deuxième orifice du carter. On comprend ici que les premiers bossages 67 des plaques 60 sont situés en vis-à-vis du premier orifice et que les deuxièmes bossages 68 des plaques 60 sont situés en vis-à-vis du deuxième orifice.

Autrement dit, le premier fluide pénètre dans le faisceau par le premier orifice puis est réparti entre les plaques 60 dans les circuits 64 de circulation du premier fluide par la boîte collectrice d'entrée. Il s'écoule dans les circuits 64 de circulation du premier fluide depuis leurs entrées 69 jusqu'au à leurs sorties 70 où il pénètre dans la boîte collectrice de sortie 72. Il sort alors du faisceau 12 par le deuxième orifice du carter.

L'échangeur 10 illustré à la figure 1 comprend selon l'invention un collecteur 30, situé sur le carter 11. Le collecteur 30 est ici situé sur une des grandes faces longitudinales du carter 11 appelée première grande face latérale (référencée 13 aux figures 3, 4 et 5). Le carter 11 comprend un premier et un deuxième orifices 14, 15, de passage du premier fluide communiquant avec le faisceau. Ces premiers et deuxième orifices 14, 15 sont situés ici sur la première grande face latérale du carter et sont représentés en pointillé sur la figure 1. Le premier et le deuxième orifices 14, 15 sont situés en particulier le long d'un premier coté 16 du carter 11, situé sur la première grande face longitudinale du coté de la vanne doseuse double, c'est-à-dire du coté d'une des petites faces latérales du carter 11.

Le deuxième orifice 15 est situé en particulier à un angle entre le premier coté 16 du carter 11 et un deuxième coté 17 du carter 11. Le deuxième coté 17 du carter 11 appartient à la première grande face latérale et est destiné à recevoir une partie de la boite collectrice 7. Le premier orifice 14 est situé en particulier à un angle entre le premier coté du carter 11 et un troisième coté 18 du carter 11. Le troisième coté 18 du carter 11 appartient à la première grande face latérale et est destiné à recevoir une partie de l'interface 2 de raccord au moteur. Dans ce cas, le premier orifice 14 est un orifice destiné à l'entrée du premier fluide dans le faisceau et le deuxième orifice 15 est un orifice destiné à la sortie du premier fluide du faisceau.

Selon l'invention, le collecteur 30 définit une première liaison 31 de fluide avec le premier orifice 14 et une deuxième liaison 32 de fluide avec le deuxième orifice 15.

Le collecteur 30 selon l'invention est représenté de manière plus détaillée aux figures 3 et 4. Au moins une des liaisons 31, 32 de fluide comprend un canal 33 de circulation du premier fluide. C'est le cas ici de la première liaison 31 du premier fluide. Le canal 33 permet d'acheminer et/ou d'évacuer le premier fluide du faisceau.

Le collecteur 30 comprend une plaque 34 présentant au moins une zone emboutie 35. Ici le collecteur 30 présente une unique zone emboutie 35. Le canal 33 de circulation du premier fluide est défini par cette zone emboutie 35 et une partie du carter 11 comprenant le premier orifice 14 et située en vis-à-vis de la zone emboutie 35.

La zone emboutie 35 comprend un fond 37 s'étendant dans un plan sensiblement parallèle au plan dans lequel s'étend la face du carter 11 accueillant le collecteur 30, ici la première grande face longitudinale 13. Le fond 37 est entouré d'une paroi périphérique 38, sensiblement perpendiculaire au fond 37 et le reliant au carter 11 de sorte que la zone emboutie 35 forme avec ce dernier le canal 33.

Le collecteur 30 comprend une première ouverture 36, prévue au niveau du fond 37 de la zone emboutie 35. Elle est située ici au niveau d'une première extrémité du canal 33, se trouvant en vis-à-vis d'une face plane du carter 11, c'est-à-dire ici en vis-à-vis de la première grande face longitudinale 13. La première ouverture 36 est située en particulier le long du deuxième coté 17 du carter 11, à coté du deuxième orifice 15. Le premier orifice 14 est situé au niveau d'une deuxième extrémité du canal 33, notamment au niveau du premier coté 16 du carter comme décrit précédemment. Le canal 33 définit ainsi un premier coude entre la première ouverture 36 et le premier orifice 14 dans un plan parallèle à la grande face longitudinale 13.

Le canal 33 est agencé pour rendre progressive une section de passage du premier fluide entre la première ouverture 36 et le premier orifice 14. On comprend ici que le canal 33 comprend, par exemple, une section de passage du premier fluide plus petite qu'une section de passage premier fluide de la première ouverture 36 et plus grande qu'une section de passage du premier fluide du premier orifice 14 ou inversement.

Dans l'exemple illustré, le premier fluide peut ainsi pénétrer dans le canal 33 par la première ouverture 36, avant de parcourir le canal 33 et d'entrer dans le faisceau par l'intermédiaire du premier orifice 14. Selon un autre mode de réalisation, le fluide pourrait effectuer le trajet en sens inverse, l'entrée du faisceau se faisant alors par le deuxième orifice 15.

Le collecteur 30 comprend une deuxième ouverture 39 située sur une face plane 90 de la plaque 34 et en vis-à-vis du deuxième orifice 15. La deuxième liaison de fluide est ainsi direct entre la deuxième ouverture 39 et le deuxième orifice 15.

Le collecteur 30 pourra en outre comprendre un premier raccord 40 relié à la première ouverture 36 et un deuxième raccord 41 relié à la deuxième ouverture 39. Dans l'exemple illustré aux figures 3 et 4, le premier et le deuxième raccords 40, 41 sont des tubulures. Ces raccords 40, 41 permettent de faire entrer et de faire sortir le premier fluide de l'échangeur. Ils sont ainsi destinés à être raccordés à une boucle de circulation du fluide. Grâce à l'invention, ces raccords sont situés sur le deuxième coté du carter 11. Il faut noter qu'une autre forme d'une ou des liaisons de fluide permettrait de disposer les raccords sur un autre des cotés du carter 11.

Le deuxième raccord 41 comprend un deuxième coude 42 agencé pour rendre progressive une section de passage du premier fluide dans le deuxième raccord 41 entre une embouchure 43 du deuxième raccord 41 destinée à être raccordée à la boucle de circulation du premier fluide et la deuxième ouverture 39. L'embouchure 43 étant notamment de section de passage plus faible que la deuxième ouverture 39, le deuxième coude 42 est de forme évasée depuis l'embouchure 43 jusqu'à la deuxième ouverture 39.

Le collecteur 30 est fixé au carter 11 par exemple par brasage et/ou grâce à des points de soudure ou de rivetage 80.

Sur les exemples illustrés aux figures 3, 4 et 5, le collecteur 30 présente une dimension plus faible que la face du carter 11 sur laquelle il est situé, c'est-à-dire sur la première grande face longitudinale 13. Le collecteur 30 occupe, par exemple, moins de la moitié de la face du carter contre laquelle il est situé, notamment en longueur.

Dans l'exemple illustré à la figure 1, le collecteur 30 présente par contre sensiblement les mêmes dimensions que la première grande face latérale de sorte que cette dernière n'est pas visible sur la figure 1 car située derrière le collecteur 30. Le collecteur 30 comprend ici des nervures 50 de renfort mécanique. Ces nervures 50 permettent d'augmenter la résistance mécanique aux contraintes de l'échangeur 10. Il est ainsi possible de réduire l'épaisseur de la première grande face longitudinale et celle du collecteur 30 à sensiblement 1.5 mm chacune tout en augmentant la résistance à la tenue mécanique du carter 11 et donc de l'échangeur 30.

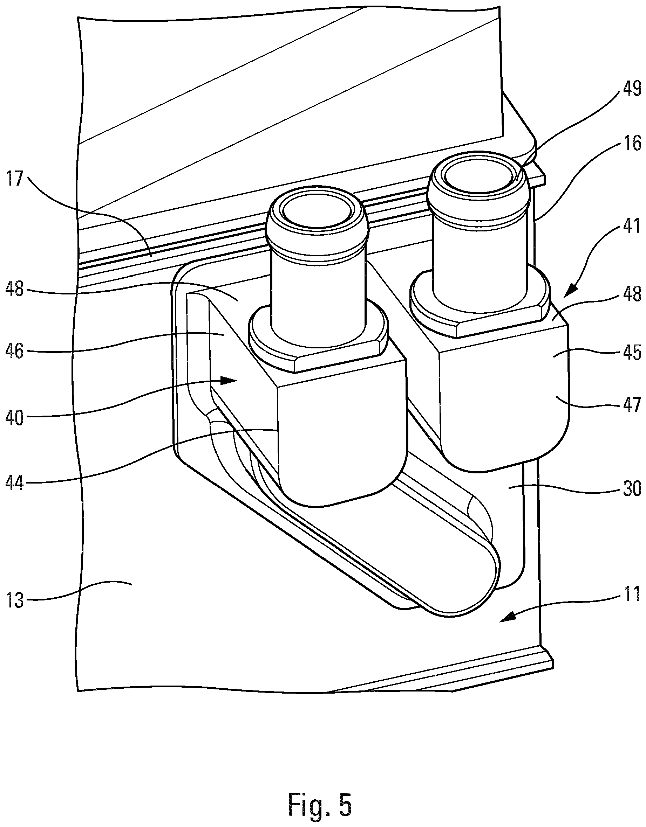

La figure 5 illustre une variante de réalisation, dans laquelle le premier et le deuxième raccords 40, 41 sont des brides appelées première et deuxième brides 44, 45. La première bride 44 comprend un premier boîtier 46 connecté à la première ouverture. La deuxième bride 45 comprend un deuxième boîtier 47 connecté directement au premier orifice.

Ces boîtiers 46, 47 sont de forme sensiblement parallélépipédique et comprennent une face en vis-à-vis du carter 11 libre de matière de sorte qu'ils forme un volume avec une partie de la face du carter 11 sur laquelle ils sont situés. Sur une face 48 des boîtiers 46, 47, perpendiculaires à la face du carter 11 contre laquelle ils sont situés et dirigé vers le deuxième coté du carter 11, sont situés des connectiques 49 de raccord du collecteur 30 à la boucle de circulation du premier fluide. Chaque boîtier 46, 47, comprend une connectique 49. Ces connectiques 49 s'étendent perpendiculairement à la face du boîtier 46, 47 sur laquelle ils sont situés.

Il est également envisageable que l'un des deux raccords 40, 41 soit une bride et l'autre une tubulure.

Les différents composants de l'échangeur sont, par exemple, en aluminium ou alliage d'aluminium. Ils sont, notamment, brasés entre eux.

## Revendications

1. Échangeur de chaleur (10), comprenant un faisceau (12) destiné à permettre un échange de chaleur entre un premier et un deuxième fluide et un carter (11) à l'intérieur duquel ledit faisceau (12) est disposé, ledit carter (11) comprenant un premier et un deuxième orifices (14, 15) de passage du premier fluide communiquant avec ledit faisceau (12), ledit échangeur (10) comprenant un collecteur (30) situé sur ledit carter (11), ledit collecteur (30) définissant une première liaison (31) de fluide avec le premier orifice (14) et une deuxième liaison (32) de fluide avec le deuxième orifice (15), dans lequel au moins une des liaisons (31, 32) de fluide comprend un canal (33) de circulation du premier fluide, dans lequel ledit collecteur (30) comprend une plaque (34) **caractérisé par le fait que** la plaque (34) présente au moins une zone emboutie (35), ledit canal (33) étant défini par ladite zone emboutie (35) et une partie du carter (11) située en vis-à-vis de ladite zone emboutie (35).

2. Echangeur (10) selon la revendication 1, dans lequel ledit collecteur (30) comprend une première ouverture (36) et une deuxième ouverture (39), ledit canal (33) définissant un premier coude entre la première ouverture (36) et le premier orifice (14) et/ou entre la deuxième ouverture (39) et le deuxième orifice (15).

3. Echangeur (10) selon la revendication 2, dans lequel la première ouverture (36) est située sur la zone emboutie (35) à une extrémité du canai (33), située en vis-à-vis du carter (11) et la deuxième ouverture (39) est située sur une face plane (40) de la plaque (34) et en vis-à-vis du deuxième orifice (15).

4. Echangeur (10) selon la revendication 2 ou 3, dans lequel le collecteur (30) comprend un premier raccord (40) relié à la première ouverture (36) et un deuxième raccord (41) relié à la deuxième ouverture (39).

5. Echangeur (10) selon la revendication 4, dans lequel le premier raccord (40) est une bride (46) ou une tubulure et le deuxième raccord (41) est une bride (47) ou une tubulure.

6. Echangeur (10) selon la revendication 4 ou 5, dans lequel l'un au moins des raccords (41) comprend un deuxième coude (42) agencé pour rendre progressive une section de passage du premier fluide dans le raccord (41) entre une embouchure (43) du raccord (41) destinée à être raccordée à une boucle de circulation du premier fluide et l'ouverture (39) correspondante.

7. Echangeur (10) selon l'une des revendications 2 à 6, dans lequel le canal (33) est agencé pour rendre progressive une section de passage du premier fluide entre la première ouverture (36) et le premier orifice (14) et/ou entre la deuxième ouverture (39) et le deuxième orifice (15).

8. Echangeur (10) selon l'une quelconque des revendications précédentes, dans lequel le collecteur (30) présente sensiblement les mêmes dimensions qu'une face (13) du carter (11) sur laquelle il est situé.

9. Echangeur (10) selon l'une quelconque des revendications précédentes, dans lequel le collecteur (30) comprend des nervures (50) de renforcement mécanique.

10. Echangeur (10) selon l'une quelconque des revendications précédentes, dans lequel le premier orifice (14), le deuxième orifice (15) et le collecteur (30) sont sur une même face (13) du carter (11).

11. Echangeur (10) selon l'une quelconque des revendications précédentes, dans lequel le premier et le deuxième orifices (14, 15) se situent le long d'un premier coté (16) du carter (11), la première et la deuxième ouvertures (36, 39) étant situées le long d'un deuxième coté (17) du carter (11), adjacent au premier coté (16) du carter (11).

12. Module d'admission d'air (1) pour moteur thermique de véhicule, notamment automobile, comprenant un échangeur (10) selon l'une quelconque des revendications précédentes.

## Patentansprüche

1. Wärmetauscher (10), der einen Plattensatz (12), der dazu bestimmt ist, einen Wärmeaustausch zwischen einem ersten und einem zweiten Fluid zu erlauben, und ein Gehäuse (11) enthält, in dessen Innerem der Plattensatz (12) angeordnet ist, wobei das Gehäuse (11) ein erstes und ein zweites Loch (14, 15) für den Durchgang des ersten Fluids enthält, die mit dem Plattensatz (12) in Verbindung stehen, wobei der Tauscher (10) einen Kollektor (30) enthält, der sich auf dem Gehäuse (11) befindet, wobei der Kollektor (30) eine erste Fluidverbindung (31) mit dem ersten Loch (14) und eine zweite Fluidverbindung (32) mit dem zweiten Loch (15) definiert, wobei mindestens eine der Fluidverbindungen (31, 32) einen Kanal (33) für die Strömung des ersten Fluids aufweist, wobei der Kollektor (30) eine Platte (34) enthält, **dadurch gekennzeichnet, dass** die Platte (34) mindestens einen tiefgezogenen Bereich (35) aufweist, wobei der Kanal (33) vom tiefgezogenen Bereich (35) und einem Teil des Gehäuses (11) definiert wird, der sich gegenüber dem tiefgezogenen Bereich (35) befindet.

2. Tauscher (10) nach Anspruch 1, wobei der Kollektor (30) eine erste Öffnung (36) und eine zweite Öffnung (39) enthält, wobei der Kanal (33) einen ersten Bogen zwischen der ersten Öffnung (36) und dem ersten Loch (14) und/oder zwischen der zweiten Öffnung (39) und dem zweiten Loch (15) definiert.

3. Tauscher (10) nach Anspruch 2, wobei die erste Öffnung (36) sich auf dem tiefgezogenen Bereich (35) an einem Ende des Kanals (33) befindet, das sich gegenüber dem Gehäuse (11) befindet, und die zweite Öffnung (39) sich auf einer ebenen Seite (40) der Platte (34) und gegenüber dem zweiten Loch (15) befindet.

4. Tauscher (10) nach Anspruch 2 oder 3, wobei der Kollektor (30) einen ersten Anschluss (40), der mit der ersten Öffnung (36) verbunden ist, und einen zweiten Anschluss (41) enthält, der mit der zweiten Öffnung (39) verbunden ist.

5. Tauscher (10) nach Anspruch 4, wobei der erste Anschluss (40) ein Flansch (46) oder ein Stutzen ist, und der zweite Anschluss (41) ein Flansch (47) oder ein Stutzen ist.

6. Tauscher (10) nach Anspruch 4 oder 5, wobei mindestens einer der Anschlüsse (41) einen zweiten Bogen (42) enthält, der eingerichtet ist, um einen Durchgangsquerschnitt des ersten Fluids in den Anschluss (41) zwischen einer Mündung (43) des Anschlusses (41), die dazu bestimmt ist, an einen Strömungskreislauf des ersten Fluids angeschlossen zu werden, und der entsprechenden Öffnung (39) progressiv zu gestalten.

7. Tauscher (10) nach einem der Ansprüche 2 bis 6, wobei der Kanal (33) eingerichtet ist, um einen Durchgangsquerschnitt des ersten Fluids zwischen der ersten Öffnung (36) und dem ersten Loch (14) und/oder zwischen der zweiten Öffnung (39) und dem zweiten Loch (15) progressiv zu gestalten.

8. Tauscher (10) nach einem der vorhergehenden Ansprüche, wobei der Kollektor (30) im Wesentlichen die gleichen Abmessungen wie eine Seite (13) des Gehäuses (11) aufweist, auf der er sich befindet.

9. Tauscher (10) nach einem der vorhergehenden Ansprüche, wobei der Kollektor (30) mechanische Verstärkungsrippen (50) enthält.

10. Tauscher (10) nach einem der vorhergehenden Ansprüche, wobei das erste Loch (14), das zweite Loch (15) und der Kollektor (30) sich auf der gleichen Seite (13) des Gehäuses (11) befinden.

11. Tauscher (10) nach einem der vorhergehenden Ansprüche, wobei das erste und das zweite Loch (14, 15) sich entlang einer ersten Seite (16) des Gehäuses (11) befinden, wobei die erste und die zweite Öffnung (36, 39) sich entlang einer zweiten Seite (17) des Gehäuses (11) angrenzend an die erste Seite (16) des Gehäuses (11) befinden.

12. Luftansaugmodul (1) für einen Wärmekraftmotor insbesondere eines Kraftfahrzeugs, das einen Tauscher (10) nach einem der vorhergehenden Ansprüche enthält.

## Claims

1. Heat exchanger (10) comprising a core bundle (12) intended to allow an exchange of heat between a first and a second fluid and a casing (11) inside which the said core bundle (12) is placed, the said casing (11) comprising a first and a second orifice (14, 15) for the passage of the first fluid, communicating with the said core bundle (12), the said exchanger (10) comprising a collector (30) situated on the said casing (11), the said collector (30) defining a first fluidic connection (31) with the first orifice (14) and a second fluidic connection (32) with the second orifice (15), in which at least one of the fluidic connections (31, 32) comprises a circulation duct (33) for the first fluid, in which the said collector (30) comprises a plate (34), **characterized in that** the plate (34) exhibits at least one chased zone (35), the said duct (33) being defined by the said chased zone (35) and a part of the casing (11) situated facing the said chased zone (35).

2. Exchanger (10) according to Claim 1, in which the said collector (30) comprises a first opening (36) and a second opening (39), the said duct (33) defining a first elbow between the first opening (36) and the first orifice (14) and/or between the second opening (39) and the second orifice (15).

3. Exchanger (10) according to Claim 2, in which the first opening (36) is situated on the chased zone (35) at one end of the duct (33), situated facing the casing (11), and the second opening (39) is situated on a planar face (40) of the plate (34) and facing the second orifice (15).

4. Exchanger (10) according to Claim 2 or 3, in which the collector comprises a first connection (40) connected to the first opening (36) and a second connection (41) connected to the second opening (39) .

5. Exchanger (10) according to Claim 4, in which the first connection (40) is a flange (46) or a connection pipe and the second connection (41) is a flange (47) or a connection pipe.

6. Exchanger (10) according to Claim 4 or 5, in which at least one of the connections (41) comprises a second elbow (42) designed to render the bore section for the passage of the first fluid in the connection (41) between a mouth (43) of the connection (41) which is intended to be connected to a circuit for the circulation of the first fluid and the corresponding opening (39) progressive.

7. Exchanger (10) according to one of Claims 2 to 6, in which the duct (33) is designed to render the bore section for the passage of the first fluid between the first opening (36) and the first orifice (14) and/or between the second opening (39) and the second orifice (15) progressing.

8. Exchanger (10) according to any one of the preceding claims, in which the collector (30) exhibits substantially the same dimensions as a face (13) of the casing (11) on which it is situated.

9. Exchanger (10) according to any one of the preceding claims, in which the collector (30) has mechanical-reinforcement ribs 50).

10. Exchanger (10) according to any one of the preceding claims, in which the first orifice (14), the second orifice (15) and the collector (30) are on one and the same face (13) of the casing (11).

11. Exchanger (10) according to any one of the preceding claims, in which the first and second orifices (14, 15) are situated along a first side (16) of the casing (11), the first and second openings (36, 39) being situated along a second side (17) of the casing (11), adjacent to the first side (16) of the casing (11).

12. Air induction module (1) for a combustion engine of a vehicle, notably a car, comprising an exchanger (10) according to any of the preceding claims.
